# EUROPEAN PATENT APPLICATION

(11) **EP 2 854 232 A1**
(43) Date of publication of application: **01.04.2015**
(21) Application number: 14186020.5
(22) Date of filing: 23.09.2014
(51) Int. Cl.: H01R 13/52, H01R 43/00, H01R 107/00, H02G 15/013, H01R 13/58

(54) **Waterproof structure of wire harness with connector**

(30) Priority: 27.09.2013 JP 2013201217
(71) Applicant: Sumitomo Wiring Systems, Ltd., Yokkaichi-shi, Mie 510-8503 (JP)
(72) Inventor: Sakka, Ryoichi, Yokkaichi-shi, Mie 510-8503 (JP)
(74) Representative: Uchida, Kenji

(57) **Abstract**

A waterproof structure of a wire harness with a connector in which crimp terminals are housed and held in a plurality of cavities respectively in the connector, the crimp terminals being crimped to electric wire terminals of a plurality of electric wires included in the wire harness, includes a sheet material having a width covering both the connector and the electric wires from rear cavity openings, having waterproof property and elasticity, and having adhesive surfaces on one side. The sheet material is fixedly attached to a connector neck portion where the plurality of electric wires project outward from the rear cavity openings of the connector by tightly attaching the adhesive surfaces to each other from two sides having the connector therebetween, and thus the connector neck portion is covered by the sheet material.

## Description

### BACKGROUND OF THE INVENTION

### 1. Field of the Invention

The present invention relates to a waterproof structure of a wire harness with a connector, the wire harness including a plurality of electric wires and having the connector at a terminal thereof.

### 2. Description of Related Art

Conventionally, a connector is attached to a terminal portion of a wire harness used for an electrical system of an automobile. The connector houses and holds in cavities thereinside crimp terminals which are crimped to terminals of a plurality of electric wires included in the wire harness. The connector is connected to a mating connector of various electric components. Thus, power is readily and reliably supplied and distributed from a battery to the electric components. Such a wire harness with a connector is disclosed in, for example, Japanese Patent Laid-Open Publication No. S62-188186 and the like.

To reduce the weight of a vehicle, aluminum electric wires, instead of copper electric wires, have recently been considered for use as electric wires included in the wire harness. However, in connection portions of the aluminum electric wires and the crimp terminals composed of a metal material whose major component is a copper, bimetal corrosion, such as electrical corrosion, is likely to occur due to ingression of fluid. Thus, as disclosed in Japanese Patent Laid-Open Publication No. 2013-161702, for example, it is suggested that the connection portions of the aluminum electric wires and the crimp terminals are covered by a waterproof or anticorrosion material, such as an epoxy resin, to prevent ingression of fluid.

In such a conventional waterproof structure, although a crimping portion of the crimp terminal of each electric wire can surely be protected from water, the electric wires need to be coated individually. This complicates a manufacturing process and increases man hours, and thus increases the cost. In addition, the crimping portion of the crimp terminal of each electric wire is likely to increase in size due to the waterproof or anticorrosion agent, thus leading to an increase in size of the cavity of the connector to be mounted and the connector as a whole.

There is also a case where a relatively low waterproof standard is required for the wire harness with the connector, such as a case where the wire harness with the connector is wired in a passenger cabin. A structure has yet to be proposed for such a case, the structure improving waterproof performance of the wire harness with the connector at low cost and in a small size.

### SUMMARY OF THE INVENTION

In view of the circumstances above, an advantage of the present invention provides a novel waterproof structure of a wire harness with a connecter, the waterproof structure readily protecting a crimping portion of a crimp terminal from water without an increase in size of the connector itself.

One aspect of the present invention provides a waterproof structure of a wire harness with a connector in which crimp terminals are housed and held in a plurality of cavities respectively in the connector, the crimp terminals being crimped to electric wire terminals of a plurality of electric wires included in the wire harness. The waterproof structure includes a sheet material having a width covering both the connector and the electric wires from rear cavity openings, the sheet material having waterproof property and elasticity, the sheet material having adhesive surfaces on one side. The sheet material is fixedly attached to a connector neck portion where the plurality of electric wires project outward from the rear cavity openings of the connector by tightly attaching the adhesive surfaces to each other from two sides having the connector therebetween, and thus the connector neck portion is covered by the sheet material.

According to the present aspect, the sheet material having waterproof property and elasticity is fixedly attached to the connector neck portion, where water is likely to enter from outside into the connector, by holding the connector neck portion between the two sides having the connector therebetween and tightly attaching the adhesive surfaces of the sheet material to each other. Furthermore, the sheet material has the width covering both the connector and the electric wires from the rear cavity openings of the connector. Thus, the very simple structure prevents water from entering inside from the rear cavity openings of the connector and ensures waterproof performance to a certain level in a crimping portion of the crimp terminal, without requiring a waterproof material in the crimping portion of the crimp terminal of each electric wire terminal. Accordingly, the waterproof performance is improved in a simple and affordable manner in a wire harness with a connector or the like in a passenger cabin where a waterproof standard is relatively low. In addition, since no waterproof material is required in the crimping portion of the crimp terminal of each electric wire terminal, an improvement in waterproof performance is achieved without an increase in size of the connector.

In particular, the sheet material, which is attached from the two sides of the connector neck portion therebetween, has the width covering both the connector and the electric wires from the rear cavity openings. Compared to a case of spirally winding a vinyl tape, no gap is formed between tapes overlapping one another. Thus, the waterproof performance is advantageously ensured in the crimping portion of each crimp terminal in the connector.

Furthermore, the sheet material has elasticity, thus advantageously following a movement of the connector neck portion. Accordingly, the sheet material is advantageously applied to the connector neck portion, which is potentially bent in any direction, and desired waterproof performance is stably ensured.

Another aspect of the present invention provides the waterproof structure of the wire harness with the connector, in which the sheet material includes one of a closed cell body and a semi-closed cell body.

According to the present aspect, the sheet material is composed of the closed cell body or semi-closed cell body. This ensures elasticity sufficient to follow bending of the connector neck portion advantageously. Furthermore, compared to a continuous cell body, such as urethane, cells in the cell body are not continued. This prevents risk of water flowing inside through cells after being deposited on the sheet material. Thus, even when aluminum electric wires are employed as the electric wires, the waterproof standard required for the passenger cabin or the like is advantageously fulfilled.

Another aspect of the present invention provides the waterproof structure of the wire harness with the connector, in which the electric wires are aluminum electric wires and are wired in a passenger cabin of an automobile.

According to the present aspect, in a case where the wire harness with the connector includes aluminum electric wires and is wired in the passenger cabin, the required waterproof performance is readily and advantageously ensured using the sheet material composed of the closed cell body or semi-closed cell body.

Another aspect of the present invention provides the waterproof structure of the wire harness with the connector, in which an ear portion is provided outside a peripheral wall surface of the connector with no gap from the peripheral wall, the ear portion not having the connector and the electric wires in between and having the adhesive surfaces of the sheet material directly attached to each other.

According to the present aspect, the ear portion, where the adhesive surfaces of the sheet material are tightly attached directly to each other, is provided outside the peripheral wall surface of the connector with no gap from the peripheral wall. Thus, the sheet material is tightly attached and fixated to the connector neck portion in a further stable manner. This advantageously prevents misalignment from the connector neck portion and ensures stable waterproof performance and durability.

According to the present invention, the sheet material having waterproof property and elasticity is fixedly attached by holding the connector neck portion between the two sides with the connector therebetween and tightly attaching the adhesive surfaces of the sheet material to each other. Thus, the waterproof performance is improved in a simple and affordable manner in the wire harness with the connector or the like in the passenger cabin where the waterproof standard is relatively low. In addition, since no waterproof material is required in the crimping portion of the crimp terminal of each electric wire terminal, the improvement in waterproof performance is achieved without an increase in size of the connector. In particular, the sheet material has the width covering both the connector and the electric wires. Compared to a case of winding a vinyl tape, no gap is formed between tapes. Furthermore, the sheet material has elasticity, thus advantageously following the movement of the connector neck portion.

### BRIEF DESCRIPTION OF THE DRAWINGS

Fig. 1 is a plan view of a waterproof structure of a wire harness with a connector according to an embodiment of the present invention;
Fig. 2 is a front view of the waterproof structure of the wire harness with the connector shown in Fig. 1;
Fig. 3 is a plan view of a connector used in the waterproof structure of the wire harness with the connector shown in Fig. 1;
Fig. 4 is a side view of the connector shown in Fig. 3;
Fig. 5 is a rear view of the connector shown in Fig. 3;
Fig. 6 is a front view of the connector shown in Fig. 3;
Fig. 7 is a plan view of a terminal of an electric wire included in the wire harness to which a crimp terminal is crimped, the wire harness being used in the waterproof structure of the wire harness with the connector shown in Fig. 1;
Fig. 8 is a side view of the terminal of the electric wire included in the wire harness shown in Fig. 7;
Fig. 9 is a plan view of a waterproof structure of a wire harness with a connector according to an alternative embodiment of the present invention; and
Fig. 10 is a front view of the waterproof structure of the wire harness with the connector shown in Fig. 9.

### DETAILED DESCRIPTION OF THE INVENTION

Embodiments of the present invention are described below with reference to the drawings.

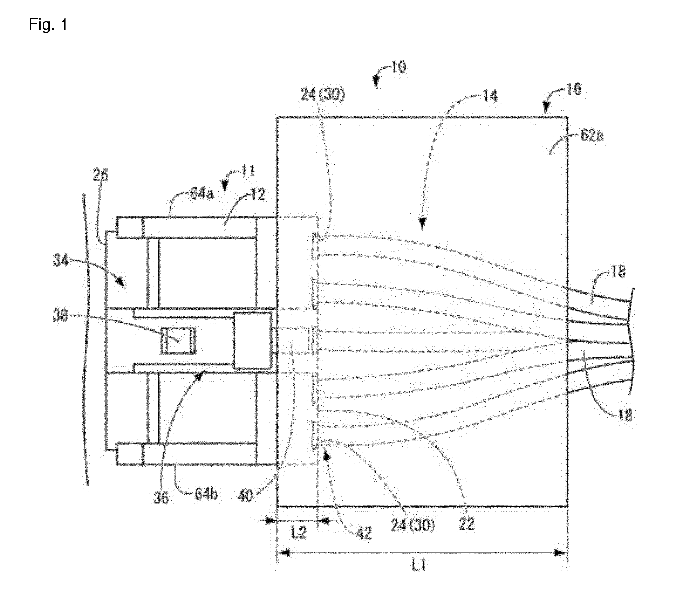

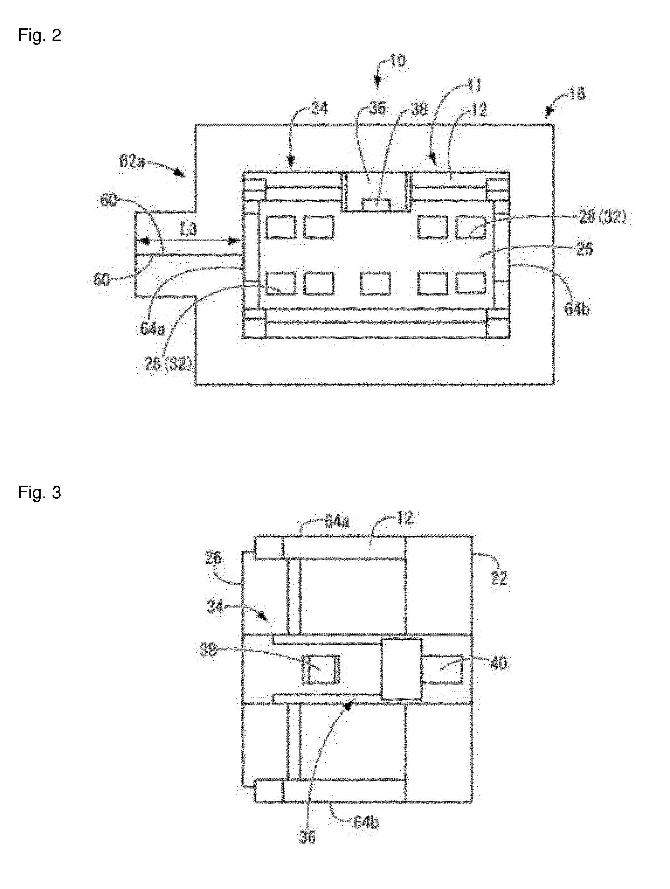

Figs. 1 to 8 illustrate a waterproof structure of a wire harness with a connector 10 according to an embodiment of the present invention. In the waterproof structure, a sheet material 16 prevents water from entering a connector neck portion 14 of the wire harness with the connector 10 where water is likely to enter from outside into a connector 11. With reference to Figs. 1 and 2, the wire harness with the connector 10 has a plurality of electric wires 18 included in the wire harness and the connector 11 provided to terminals of the plurality of electric wires 18. A front side of the connector 11 (left side in Fig. 1) connects to a mating connector of various electrical components (not shown in the drawings). In the description below, the front side refers to the left side in Fig. 1; a rear side refers to a right side in Fig. 1; upward refers to upward in Fig. 2; and downward refers to downward in Fig. 2.

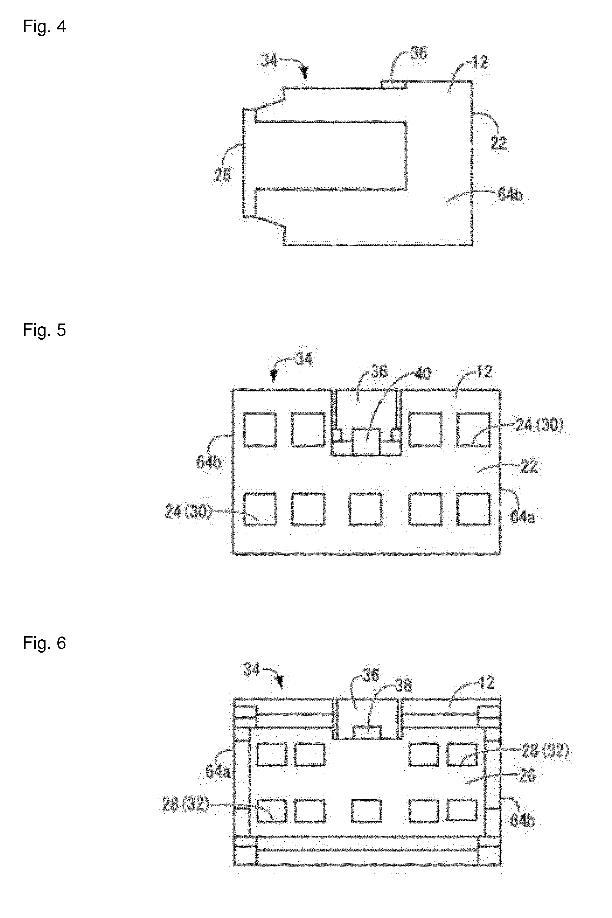

A connector housing 12 included in the connector 11 is illustrated in Figs. 3 to 6. The connector housing 12 has substantially a block shape and is integrally formed by injection molding or the like from a synthetic resin, such as, for example, polypropylene (PP) or polyamide (PA). With reference to Figs. 5 and 6, a plurality of cavities pass through inside the connector housing 12. Specifically, a plurality of (nine in the present embodiment) rear cavities 24 each having a rectangular opening rearward are provided in a rear surface 22 of the connector housing 12, while a plurality of (nine in the present embodiment) front cavities 28 each having a rectangular opening forward are provided in opposite positions in a front surface 26 of the connector housing 12. The rear cavities 24 and the front cavities 28 are connected in the connector housing 12. A connector terminal (not shown in the drawings) of the mating connector is inserted to the front cavity 28 and is fitted into a crimp terminal 44 crimped to an electric wire terminal 42 (described later) of the electric wire 18 inserted to the rear cavity 24. Thus, the mating connector is connected. A rear cavity opening 30 to which the crimp terminal 44 is inserted is larger than a front cavity opening 32 to which the connecter terminal is inserted.

In addition, with reference to Fig. 1 (Fig. 3), a rectangular lock projection portion 36 is provided on an upper surface 34 of the connector housing 12, the lock projection portion 36 having an L shape in cross section, projecting rearward, and having a cantilever structure. A lock projection 38 projecting obliquely rearward and outward is provided in a central portion of the lock projection portion 36. A projection end portion of the lock projection portion 36 serves as a lock release 40. With the structure, the connector 11 is inserted to the mating connector from the front side, and then the lock projection 38 of the lock projection portion 36 of the connector housing 12 is locked with a lock projection (now shown in the drawings) of the mating connector and is thus coupled and fixed. To unlock, the connector 11 is pulled rearward while the lock release 40 of the connector housing 12 is being pressed. Then, the connector 11 can be pulled out from the mating connector.

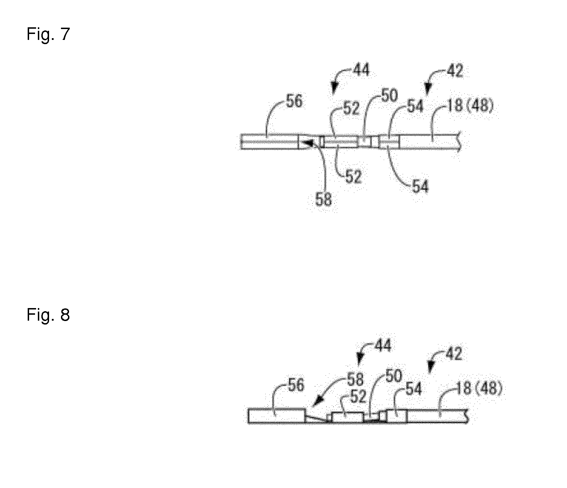

An example of one of the plurality of electric wires 18 is illustrated in Figs. 7 and 8, the electric wires 18 being included in the wire harness with the connector 10. The crimp terminal 44 is crimped to the electric wire terminal 42 of each electric wire 18. With reference to Figs. 1 and 5, the crimp terminal 44 is housed and held in each of the plurality of rear cavities 24 in the connector housing 12 of the connector 11, and thus the wire harness with the connector 10 is configured. More specifically, an insulating coating 48 is stripped from a front end portion of the electric wire 18 in the electric wire terminal 42, and then a strand 50 is exposed. The strand 50 is crimped to a strand crimping portion 52 of the crimp terminal 44, and the front end portion of the electric wire 18 where the stand 50 is exposed is crimped to an electric wire crimping portion 54 of the crimp terminal 44. Thus, the electric wire 18 is fixated and connected to the crimp terminal 44. In addition, the crimp terminal 44 has in a front end portion (left side in Figs. 7 and 8) a tubular connection portion 56 open in a front-rear direction. The crimp terminal 44 crimped to the electric wire terminal 42 as above is inserted to each of the plurality of rear cavities 24 in the connector housing 12. Thereby, a rear end portion 58 of the connection portion 56 of the crimp terminal 44 is locked with a locking arm (not shown in the drawings) in the rear cavity 24, and is thus prevented from being disengaged. Furthermore, when the connector 11 is inserted to the mating connector, a connector terminal (not shown in the drawings) of the mating connector is inserted to the tubular connection portion 56 of the crimp terminal 44, and thus the electric wire 18 is electrically connected to the mating connector.

In the present embodiment, each electric wire 18 is composed of an aluminum electric wire. The aluminum electric wire has a structure in which the stand 50, which is a bundle of a plurality of metal wires composed of an aluminum material, such as aluminum or aluminum alloy, is covered by the insulating coating 48 having electrical insulation, such as an ethylene resin or styrene resin. The strand 50 is exposed by stripping the insulating coating 48 from the front end portion of each electric wire 18.

The wire harness with the connector 10 having such a structure is wired in a passenger cabin of an automobile, for example. The connector neck portion 14, where water is likely to enter from outside into the connector 11, is protected from water by the sheet material 16. With reference to Fig. 1, the connector neck portion 14 is an area where the plurality of electric wires 18 project outward (right side in Fig. 1) from the rear cavity openings 30 of the connector 11.

The sheet material 16 is illustrated in Figs. 1 and 2, the sheet material 16 being used in the waterproof structure of the wire harness with the connector 10 according to the present embodiment. The sheet material 16 is a band-shaped member having substantially a rectangular shape. The band-shaped member is folded in two and is mounted to the connector neck portion 14 from the side (front side of Fig. 1) of the connector neck portion 14 so as to cover both upper and lower sides of the connector neck portion 14 as a whole. Thus, the connector neck portion 14 is protected from water.

More specifically, the sheet material 16 is an integrally formed member composed of a closed cell body or semi-closed cell body. The sheet material 16 has an adhesive surface 60 on one side and is an elastic band-shaped member continuously extending in a longitudinal direction. The band-shaped member can be cut into any length (cut into any length associated with the size of the connector 11). The sheet material 16 has a width L1 covering both the connector 11 and the electric wires 18 from the rear cavity openings 30.

The closed cell body and the semi-closed cell body are mainly composed of EPDM (ethylene-propylene-diene rubber). The closed cell body, in which cells are closed to one another in a rubber main body, is inherently waterproof. Meanwhile, the semi-closed cell body, in which cells are partially interconnected in a rubber main body, includes a portion having no waterproof property. In a case of a passenger cabin, however, where a relatively low waterproof standard is required, required waterproof performance is advantageously ensured. An example of the closed cell body may be Eptsealer No. 6800 Series manufactured by Nitto Denko Corporation. An example of the semi-closed cell body may be Everlight Moran #730 manufactured by Bridgestone Corporation.

Substantially the rectangular sheet material 16 having such a structure is folded in two and is mounted from the side (front side of Fig. 1) of the connector neck portion 14 toward the connector neck portion 14. Then, the adhesive surfaces 60 (refer to the left side in Fig. 2) are tightly and fixedly attached to each other from two sides in an up-down direction of the connector neck portion 14 with the connector 11 therebetween. Thus, the connector neck portion 14 is covered by the sheet material 16.

An overlapping margin L2 of the sheet material 16 relative to the connector 11 has a size that ensures adhesive strength so as to prevent the sheet material 16 from disengaging from the connector 11 due to a movement of the connector neck portion 14. In the present embodiment, a maximum value that avoids the lock projection portion 36 is set. An ear portion 62a, where the adhesive surfaces 60 of the sheet material 16 are tightly attached directly to each other, is provided outside a side surface 64a, which is a peripheral wall surface of the connector 11, with no gap from the side surface 64a of the connector 11 and without holding the connector 11 or the electric wires 18 in between. In the present embodiment, a width L3 of the ear portion 62a is secured 10 mm or more. This stably secures waterproof performance and also ensures durability after being mounted in a vehicle. The ear portion 62a is provided to the flat side surface 64a in the peripheral wall surface of the connector 11 where the lock projection portion 36 is not provided. This saves a wrapping margin of the sheet material 16 as much as possible and prevents the ear portion 62a from peeling off from the connector 11.

In the waterproof structure of the wire harness with the connector 10 according to the present embodiment, the sheet material 16 having waterproof property and elasticity is fixedly attached to the connector neck portion 14, where water is likely to enter from outside into the connector 11, by holding the connector neck portion 14 between both the upper and lower sides and tightly attaching the adhesive surfaces 60 of the sheet material 16 to each other. Thus, the very simple structure prevents water from entering inside from the rear cavity openings 30 of the connector 11 and ensures the waterproof performance to a certain level in the strand crimping portion 52 of the crimp terminal 44. Accordingly, unlike a conventional case, no waterproof material is required in the strand crimping portion 52 of the crimp terminal 44 of the each electric wire terminal 42 for the wire harness with the connector 10 wired in the passenger cabin where the waterproof standard is relatively low. This prevents an increase in size of the connector 11.

In particular, the sheet material 16, which is attached from both the upper and lower sides of the connector neck portion 14, has a width covering both the connector 11 and the electric wires 18 from the rear cavity openings 30. Compared to a conventional case of spirally winding a vinyl tape, no gap is formed between tapes overlapping one another. Thus, the waterproof performance is advantageously ensured in the strand crimping portion 52 of each crimp terminal 44 in the connector 11.

Furthermore, the sheet material 16 has elasticity, thus advantageously following a movement of the connector neck portion 14. Accordingly, the sheet material 16 is advantageously applied to the connector neck portion 14, which is potentially bent in any direction, and desired waterproof performance is stably ensured.

In addition, the sheet material 16 is composed of the closed cell body or semi-closed cell body. This ensures elasticity sufficient to follow bending of the connector neck portion 14 advantageously. Furthermore, compared to a continuous cell body, such as urethane, cells in the cell body are not continued. This prevents risk of water flowing inside through cells after being deposited on the sheet material 16. Thus, even when aluminum electric wires are employed as the electric wires 18, the waterproof standard required for the passenger cabin or the like is advantageously fulfilled.

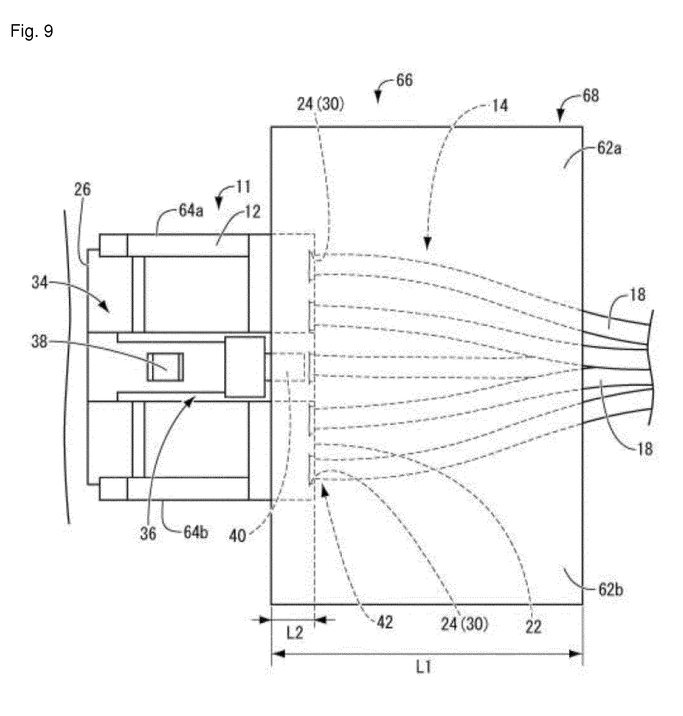

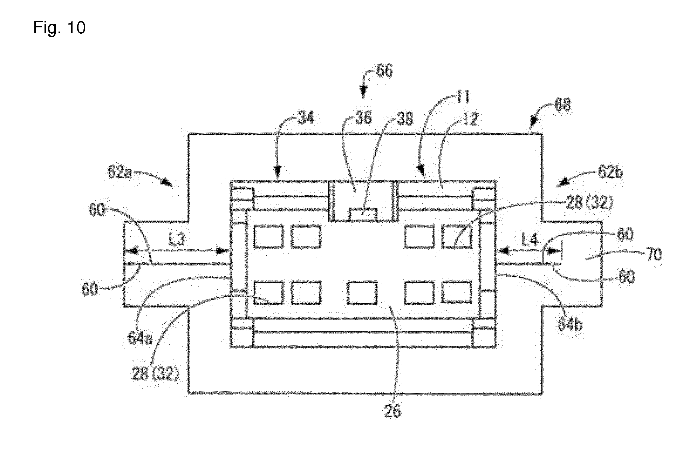

The sheet material 16 according to another embodiment is described in detail below with reference to Figs. 9 and 10, the sheet material 16 being used in the waterproof structure of the wire harness with the connector 10 of the present invention. Members and portions having structures similar to those in the embodiment above are denoted by reference numerals identical to those in the embodiment above and detailed descriptions thereof are omitted. Specifically, a waterproof structure of a wire harness with a connector 66 is different from that in the embodiment above in that ear portions 62a and 62b, where the adhesive surfaces 60 of a sheet material 68 are tightly attached directly to each other without holding the connector 11 or the electric wires 18 therebetween, are provided outside side surfaces 64a and 64b, which are peripheral wall surfaces of the connector 11, with no gaps from the side surfaces 64a and 64b. In the wire harness with the connector 66 as well, the sheet material 68 is fixedly attached by holding the connector neck portion 14 between upper and lower sides and tightly attaching the adhesive surfaces 60 to each other. The sheet material 68 has a width covering both the connector 11 and the electric wires 18 from the rear cavity openings 30 of the connector 11. Thus, the wire harness with the connector 66 has substantially a similar structure to the waterproof structure of the wire harness with the connector 10 of the embodiment above, and thus achieves similar effects.

The ear portions 62a and 62b, which are the adhesive surfaces 60 of the sheet material 68 tightly attached directly to each other, are provided outside the both side surfaces 64a and 64b, which are the peripheral wall surfaces of the connector 11, with no gaps from the both side surfaces 64a and 64b. Accordingly, the sheet material 68 is tightly attached and fixated to the connector neck portion 14 in a further stable manner. Thus, the sheet material 68 is advantageously prevented from being misaligned from the connector neck portion 14, and thus stable waterproof performance and durability are ensured.

In the present embodiment, the sheet material 68 is one sheet of substantially a rectangular band-shaped member. The band-shaped member is folded in two and covers the entire connector neck portion 14 from both the upper and lower sides. Alternatively, two sheets of similar rectangular band-shaped members may be used. Covering the entire connector neck portion 14 from both the upper and lower sides with the two sheets of the similar band-shaped members eliminates a bend portion 70 in the ear portion 62b of the sheet material 68. Thus, the adhesive surfaces 60 of the sheet material 68 are tightly attached directly to each other in a wider width than a width L4 (refer to Fig. 10). Accordingly, the sheet material 68 is tightly attached and fixated to the connector neck portion 14 in a further stable manner.

The embodiments of the present invention are described in detail above. However, the present invention is not limited to the specifics thereof. For example, the sheet material 16 is composed of a closed cell body or semi-closed cell body in the embodiments above. The sheet material 16, however, is not limited to the materials above, provided that a material has waterproof property and elasticity. In addition, the sheet material 16 can be fixedly attached to the connector neck portion 14 by tightly attaching the adhesive surfaces 60 of the sheet material 16 that holds the connector neck portion 14 between the two sides with the connector 11 therebetween. As in the embodiments above, the connector neck portion 14 can be held between the two sides in the up-down direction. Alternatively, the connector neck portion 14 may also be held between two sides in a left-right direction depending on a shape of the connector 11.

In addition to the wire harness with the connector including aluminum electric wires, the present invention is similarly applicable to a wire harness with a connector including copper electric wires.

## Claims

1. A waterproof structure of a wire harness with a connector in which crimp terminals are housed and held in a plurality of cavities respectively in the connector, the crimp terminals being crimped to electric wire terminals of a plurality of electric wires included in the wire harness, the waterproof structure comprising:
a sheet material having a width covering both the connector and the electric wires from rear cavity openings,
the sheet material having waterproof property and elasticity,
the sheet material having adhesive surfaces on one side, wherein
the sheet material is fixedly attached to a connector neck portion where the plurality of electric wires project outward from the rear cavity openings of the connector by tightly attaching the adhesive surfaces to each other from two sides having the connector therebetween, and thus the connector neck portion is covered by the sheet material.

2. The waterproof structure of the wire harness with the connector according to claim 1, wherein the sheet material comprises one of a closed cell body and a semi-closed cell body.

3. The waterproof structure of the wire harness with the connector according to claim 1 or 2, wherein the electric wires are aluminum electric wires and are wired in a passenger cabin of an automobile.

4. The waterproof structure of the wire harness with the connector according to one of claims 1 to 3, wherein an ear portion is provided outside a peripheral wall surface of the connector with no gap from the peripheral wall, the ear portion not having the connector and the electric wires in between and having the adhesive surfaces of the sheet material directly attached to each other.
